# EUROPÄISCHE PATENTANMELDUNG

(11) **EP 1 163 871 A1**
(43) Veröffentlichungstag der Anmeldung: **19.12.2001**
(21) Anmeldenummer: 01113046.5
(22) Anmeldetag: 29.05.2001
(51) Int. Cl.: A47J 36/02, A47J 37/10

(54) **Geräte für Küche und Haushalt mit haftungsvermindernder Beschichtung**

(30) Priorität: 07.06.2000 DE 10028296
(71) Anmelder: LEIFHEIT Aktiengesellschaft, D-56377 Nassau (DE)
(72) Erfinder: Zimmer, Jürgen, 56077 Koblenz (DE)

(57) **Zusammenfassung**

Geräte für Küche und Haushalt, insbesondere Bratpfannen und Backformen, mit einer Beschichtung, die aus einem haftungsvermindernden polymerischen Material besteht, wobei die Beschichtung mit einem Füllmaterial mit einer Korngröße ≥ der Schichtdicke der Beschichtung zur Erzeugung einer rauen Oberfläche versehen ist.

## Beschreibung

Die Erfindung betrifft Geräte für Küche und Haushalt, insbesondere Bratpfannen und Backformen, mit einer Beschichtung, die aus einem haftungsvermindemdem, polymerischen Material besteht.

Derartige Beschichtungen in den unterschiedlichen Qualitätsstufen sind insbesondere für Bratpfannen und Kuchenbackformen allgemeiner Stand der Technik. Allerdings stagniert die Entwicklung seit einigen Jahren und ist lediglich durch neue Superlative in der Marketingauslobung gekennzeichnet.

Aufgabe der Erfindung ist es, die bekannten und gebräuchlichen Beschichtungen in Ihrer Wirkungsweise spürbar zu Verbessem und neue Anwendungsgebiete zu erschließen.

Dies wird erfindungsgemäß mit den kennzeichnenden Merkmalen des Anspruchs 1 erreicht. Dies bringt bei den klassischen Anwendungsfällen für eine Antihaftbeschichtung wie bei Bratpfannen und Backformen eine eklatant sichtbare Verbesserung im Antihaftverhalten auch bei schwierigen Lebensmitteln. Aber insbesondere bringt es eine sprunghafte Verbesserung in der Handhabung ganz normaler Haushaltsgeräte (z. B. Schöpflöffel, Pfannenwender, Gemüselöffel, Salatschalen, Schüsseln, Rührgefäße). Selbst Aufbewahrungsbehälter (z. B. Frischhaltedosen, Gefrierdosen) werden damit weniger Anfällig gegen Verschmutzung und sind spürbar leichter zu reinigen.

Insbesondere bei dieser Produktgattung (Gefrierdosen, Frischhaltebehälter, Salatschalen, Rührschüsseln, usw.) ist es sinnvoll, die Schicht mit einem antibakteriell wirkenden Zusatz zu versehen. Besonders beim Aufbewahren von Lebensmitteln macht sich dabei der Effekt der Unterdrückung der Keimvermehrung sehr deutlich bemerkbar.

## Patentansprüche

1. Geräte für Küche und Haushalt, insbesondere Bratpfannen und Backformen, mit einer Beschichtung, die aus einem haftungsvermindemden polymerischen Material besteht, **dadurch gekennzeichnet, dass** die Beschichtung mit einem Füllmaterial mit einer Korngröße ≥ der Schichtdicke der Beschichtung zur Erzeugung einer rauen Oberfläche versehen ist.

2. Geräte für Küche und Haushalt nach Anspruch 1, **dadurch gekennzeichnet, dass** die Schichtdicke in einem Bereich zwischen 5 µm und 20 µm, bevorzugt zwischen 7 µm und 15 µm und die Komgröße jeweils 10 % über der Schichtdicke liegen.

3. Geräte für Küche und Haushalt nach Anspruch 2, **dadurch gekennzeichnet, dass** die Schicht zumindest zweistufig aufgebaut ist, wobei eine Teilschicht unter Beimischung von Füllmaterial aufgebaut und diese mit einer Deckschicht bevorzugt aus Silikonmaterial, versiegelt ist.

4. Geräte für Küche und Haushalt nach einem der Ansprüche 1 bis 3, **dadurch gekennzeichnet, dass** die Schicht mit einem antibakteriell wirkenden Zusatz versehen.ist.

5. Geräte für Küche und Haushalt nach Anspruch 4, **dadurch gekennzeichnet, dass** dieser Zusatz als Füllmaterial verwendet ist.

6. Geräte für Küche und Haushalt nach Anspruch 4 oder 5, **dadurch gekennzeichnet, dass** der Zusatz aus Schwermetall (z. B. Silber, Kupfer) und/oder Schwefel besteht.
